# EUROPÄISCHE PATENTANMELDUNG

(11) **EP 1 892 201 A2**
(43) Veröffentlichungstag der Anmeldung: **27.02.2008**
(21) Anmeldenummer: 07113672.5
(22) Anmeldetag: 02.08.2007
(51) Int. Cl.: B65G 1/02, A47F 5/10

(54) **Verfahren zum Umbau eines Regals eines Regallagers und entsprechendes Modul**

(30) Priorität: 24.08.2006 DE 102006039619
(71) Anmelder: Dematic GmbH & Co. KG, 63073 Offenbach (DE)
(72) Erfinder: Schwardt, Axel, 91126 Schwabach (DE)
(74) Vertreter: Moser & Götze

(57) **Zusammenfassung**

Verfahren zum Umbau eines Regals (2) eines Regallagers (1), bei dem mehrere Gegenstände (S) gemeinsam auf Paletten beladen in Regalfächern (3) abgelegt werden, in ein Regal (2) für die Einzellagerung der Gegenstände (S), bei dem die Gegenstände (S) einzeln in Regalfächer (11) gelagert werden, wobei die bestehenden Paletten-Regalfächer (3) für das separate Einlagern der einzelnen Gegenstände (S) derart unterteilt werden, dass Regalfächer (11) für die einzelnen Gegenstände (S) bereitgestellt werden, und entsprechendes Modul (7).

## Beschreibung

Die Erfindung betrifft ein Verfahren zum Umbau eines Regals eines Regallagers, bei dem mehrere Gegenstände gemeinsam auf Paletten beladen in Regalfächern abgelegt werden, in ein Regal für die Einzellagerung der Gegenstände, bei dem die Gegenstände einzeln in Regalfächer gelagert werden, und ein entsprechendes Modul dafür.

Unter Gegenstände sollen nachfolgend nicht nur einzelne Artikel an sich, sondern auch mit einem oder mehreren einzelnen Artikeln gefüllte Behälter zur Aufbewahrung und auch Behälter an sich verstanden werden. Unter dem Begriff Gegenstände sind also alle Stückgüter zu verstehen. Es wird daher nachfolgend lediglich zur Vereinfachung der Lesbarkeit der Begriff Gegenstände verwendet.

Es ist allgemein bekannt, dass bei Paletten-Regallagern mehrere Artikel oder Behälter gemeinsam auf einer Palette geladen werden, die wiederum in einem Regalfach entsprechender Größe eines Regals gelagert wird. Dabei ist eine effektive Raumausnutzung im Regallager nur möglich, wenn die Paletten entsprechend vollständig beladen bzw. bestapelt sind, d.h. auf ihrer gesamten dazu zur Verfügung stehenden Fläche und in entsprechender Höhe, die u. a. durch die Höhe der Regalfächer an sich vorgegeben wird.

Problematisch ist hierbei der Umgang mit einzelnen Gegenständen, da es, je nach vorhandener Menge, nicht immer möglich ist, die Paletten mit Gegenständen vollständig zu beladen. Somit ergibt sich eine schlechte Raumausnutzung, da die unvollständigen Paletten immer ein gesamtes Regalfach füllen, unabhängig von ihrer Beladung bzw. Bestapelung. Die Menge auf der jeweiligen Palette vorhandener einzelner Gegenstände etc. muss dann über ein Lagerverwaltungsprogramm nachverfolgt und überwacht werden. Dies bringt neben der schlechten Raumausnutzung zusätzlich einen großen Aufwand mit sich.

Ferner muss zur Abgabe einer Menge Gegenstände, die geringer ist als die gesamte Menge auf der jeweiligen Palette, die Palette zunächst aus dem Regalfach entnommen werden, die gewünschte Menge von der Palette abgehoben und die Palette wieder zurück in das Regalfach gestellt werden. Andererseits geht der Trend dahin, die Gegenstände nicht mehr palettenweise abzugeben, sondern in variablen teilweise kleinen Mengen, und daher auch als einzelne Gegenstände zu lagern.

Andererseits ist für eine automatische Bedienung eine sehr genau Ausrichtung bzw. Anordnung des Regals im Lager bzw. bezüglich der Bedienungsvorrichtung notwendig. Hierbei ist problematisch, dass die Regal selbst sehr genau sind, aber deren Anordnung im Lager ungenau ist.

Aufgabe der Erfindung ist es, ein Verfahren und ein zugehöriges Modul bereitzustellen, die den Umbau eines Regallagers von der Lagerung von großen Gegenständen auf die Lagerung von kleinen Gegenständen erlauben. Insbesondere soll ein Verfahren und ein zugehöriges Modul bereitgestellt werden, die eine Möglichkeit bieten, bestehende Paletten basierte Regallager so umzubauen, dass sie sich auch für die Lagerung einzelner Gegenstände eignen. Insbesondere soll ein wahlfreier Zugriff auf die Gegenstände möglich sein.

Diese Aufgabe wird durch die in Anspruch 1 und 2 angegebenen Verfahren sowie den in Anspruch 7 und 8 angegebenen Modulen gelöst.

Dadurch, dass die bestehenden Regalfächer der großen Gegenstände für das separate Einlagern der einzelnen kleinen Gegenstände derart unterteilt werden, dass Regalfächer für die einzelnen kleinen Gegenstände bereitgestellt werden, ist es möglich, ohne großen Aufwand ein bestehendes Regal für große Gegenstände auf eine Lagerung für kleine Gegenstände umzubauen.

Unter kleineren Gegenständen werden vorliegend insbesondere Gegenstände verstanden, wie sie einleitend definiert wurden, die kleiner sind, als die bisher gelagerten Gegenstände, insbesondere zuvor gemeinsam auf Paletten beladen gelagert wurden.

Insbesondere ist es dadurch, dass die bestehenden Paletten-Regalfächer für das separate Einlagern der einzelnen Gegenstände derart unterteilt werden, dass Regalfächer für die einzelnen Gegenstände bereitgestellt werden, möglich, das bestehende Regal eines Paletten-Regallagers weiterhin zu nutzen, ohne dass dieses, wie bisher üblich, abgerissen wird.

Insbesondere werden kleinzellige Regalfächer bereitgestellt. Unter kleinzellig soll vorliegend die mindestens einmalige Unterteilung der bisherigen Regalfächer für Paletten, vorzugsweise der Höhe nach, verstanden werden. Insbesondere werden die Regalfächer für Paletten mehrfach der Höhe und der Breite nach unterteilt, so dass kleine Regalfächer entstehen, die für die Einzellagerung der Gegenstände geeignet sind.

Grundgedanke der Erfindung ist also der Erhalt und die Weiter- oder Wiederverwendung des bestehenden Altlagers (für Paletten) durch Unterteilung der einzelnen großen (Paletten-)Regalfächer in mehrere kleinere nebeneinander und untereinander angeordnete Regalfächer für die einzelnen Gegenstände. Der durch die (Paletten-)Regalfächer zur Verfügung stehende Raum wird durch die Unterteilung für die einzelnen Gegenstände optimal ausgenutzt. Die ursprünglich gemeinsam auf einer Palette gestapelten und so gelagerten Gegenstände werden nun einzeln in eigenen Regalfächern gelagert.

Es versteht sich, dass auch ein nur teilweiser Umbau unter den Gedanken der Erfindung fallen soll.

In einer bevorzugten Ausführungsform werden die Regalfächer durch Einbringen modularer Regaleinheiten unterteilt. Dies hat den Vorteil, dass die modularen Regaleinheiten vorgefertigt montiert werden können und nicht an Ort und Stelle aus einzelnen Teilen im Regallager zusammengesetzt werden müssen, was mühsam, aufwendig und schwierig ist.

Sinnvollerweise werden die modularen Regaleinheiten derart eingebracht, dass sie mit Auflageträgern der Paletten-Regale wechselwirken. Mit anderen Worten die ohnehin für das Lagern der Paletten in den einzelnen Fächern vorhandenen Querträger zum Abstellen der Paletten werden in das Montagekonzept einbezogen.

Dies erfolgt nicht nur für die Lastaufnahme an sich, sondern auch für die Ausrichtung und Fixierung der modularen Regaleinheiten in den ehemaligen Paletten-Regalfächern.

Bevorzugt ist es, wenn die modularen Regaleinheiten hierzu die Auflageträger zumindest teilweise umgreifen. Hier könnte ein Träger an der Unterseite der Module den jeweiligen Auflageträger umgreifen. Somit ist ein Verrutschen der Module zumindest in eine Raumrichtung, insbesondere in Richtung der Tiefe der Regalfächer, unterbunden. Zusätzlich kann vorgesehen sein, dass diese Wechselwirkung zwischen Modul und Auflagerträger mit weiteren Befestigungen/Arretierungen versehen wird. Je nach Einsatzzweck kann das Modul auch durch Befestigungen, Verankerungen etc. an dem Gerüst des ehemaligen Paletten-Regallagers zusätzlich festgelegt werden.

Da die neu geschaffenen Regalfächer für die Gegenstände von dem Regalbediengerät angefahren werden müssen, ist vorgesehen, dass die modularen Regaleinheiten mit einem Mittel zur Orientierungshilfe für das Regalbediengerät ausgestattet sind. Dies erleichtert auch den Einlern- oder Teach-In-Prozeß, da die neuen Koordinaten der Regalfächer so automatisch bei der Einlernfahrt des Regalbediengeräts ermittelt bzw. übernommen werden können. Bevorzugt ist es dabei, wenn das Mittel zur Orientierungshilfe bei allen modularen Regaleinheiten einheitlich angeordnet ist und es sich um eine Lochmaske in der seitlichen Vorderfront des jeweiligen Moduls handelt. Somit lässt sich die Problematik der ungenauen Anordnung der Regale im Lager sehr schön lösen, da die Markierungen die Justierung des Regalbediengeräts auf einfache Weise ermöglichen.

Die Erfindung umfasst ferner ein Modul zum Umbau von Regalfächern eines Regals eines Regallagers, bei dem große Gegenstände in Regalfächern abgelegt werden, in ein Regal für die Lagerung kleinerer Gegenstände, bei dem die kleineren Gegenstände einzeln in Regalfächer gelagert werden, das derart ausgestaltet ist, dass Regalfächer in den bestehenden Regalfächern für das separate Einlagern der einzelnen kleineren Gegenstände bereitgestellt werden.

Die Erfindung umfasst ebenso ein Modul zum Umbau der Regalfächer eines Regallagers, bei dem mehrere Gegenstände gemeinsam auf Paletten gestapelt in Regalfächern abgelegt werden, in ein Regal für die Einzellagerung der Gegenstände, bei dem die Gegenstände einzeln in Regalfächer gelagert werden, das derart ausgestaltet ist, dass Regalfächer in den bestehenden Regalfächern für das separate Einlagern der einzelnen Gegenstände bereitgestellt werden.

Das Modul stellt jeweils also die oben bereits beschriebenen modularen Regaleinheiten bzw. die Unterteilung der ehemaligen (Paletten-)Regalfächer zur Verfügung.

Dazu ist das Modul vorzugsweise gerüstartig ausgebildet, insbesondere als ein bestehendes ursprüngliches Paletten-Regalfach mit mehreren Stützelementen in mehrere kleinzellige Regalfächer für einzelne Gegenstände unterteilend ausgebildet.

Sinnvollerweise sind mindestens die Stützelemente Teil eines modularen Stecksystems. Bevorzugt ist es, wenn alle strukturellen Elemente des Moduls, z.B. Böden, Seitenelemente, Wände oder Streben usw., als modulares Stecksystem ausgebildet sind. Dann ist die Montage und Anpassung an unterschiedliche Paletten-Regallager in einfacher Weise und variabel möglich sowie die Herstellung kostengünstig.

Weiter ist es von Vorteil, wenn das Modul ausgebildet ist, um bestehende Auflageträger für die Paletten zumindest teilweise zu umgreifen. Üblicherweise weisen nämlich die Paletten-Regale Querträger, sogenannte Auflageträger auf, auf denen die Paletten aufgelegt werden, da diese selbsttragend sind. Hier könnte z.B. ein Träger an der Unterseite der Module den jeweiligen Auflageträger umgreifen. Somit ist ein Verrutschen der Module zumindest in eine Raumrichtung ohne weitere Maßnahmen unterbunden.

Weiterhin kann es vorgesehen sein, dass Mittel zur Orientierungshilfe, insbesondere eine Lochmaske, für ein Regalbediengerät in den Modulen vorgesehen sind. Diese erleichtern den Teach-In-Prozeß des Regalbediengeräts usw.

Weitere Merkmale, Einzelheiten und Vorteile der Erfindung ergeben sich aus der nachfolgenden Beschreibung eines Ausführungsbeispieles anhand der Zeichnung. Es zeigen:
- Fig. 1: eine Vorderansicht eines umgebauten Regalagers;
- Fig. 2: eine Draufsicht auf ein Regalfach des Regallagers aus Fig. 1 und
- Fig. 3: eine Seitenansicht auf das Regalfach aus Fig. 1 und 2.

In den Figuren ist ein als Ganzes mit 1 bezeichnetes Regallager dargestellt, von dem nur ein Ausschnitt eines umgebauten Regals 2 abgebildet ist.

Das Regallager 1 umfasst zusätzlich übliche Komponenten, wie Regalbediengeräte, Förderanlagen usw. Diese sind aus Gründen der Übersichtlichkeit nicht dargestellt.

Das Regal 2 diente vor dem Umbau ausschließlich zur Lagerung von Paletten in entsprechenden Regalfächern 3.

Das Regal 2 wird von einem Gerüst mit seitlichen Trägern 4 und dazwischen angeordneten Querträgern 5 gebildet. Zusätzlich sind zur Ausbildung der ursprünglichen Regalfächer 3 jeweils zwei Auflageträger 6 an entsprechenden Stellen zwischen den seitlichen Trägern 4 angeordnet. Auf diesen Auflageträgern 6 wurden normalerweise, d.h. vor dem Umbau, die Paletten abgestellt.

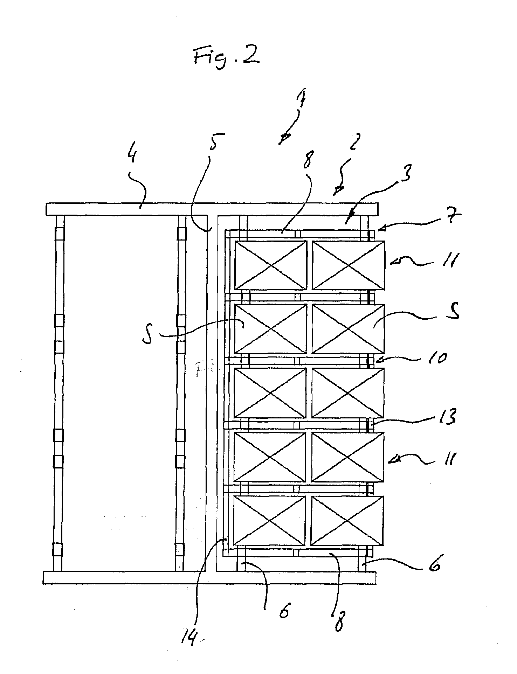

Wie aus Fig. 2 ersichtlich ist, besitzt das so gebildete Grundgerüst des Regals 2 im Schnitt eine Doppel-T-Form oder I-Form.

Vorliegend sind jedoch durch den Umbau Module 7 in die Regalfächer 3 eingebracht, die auf den Auflageträgern 6 aufliegen.

Die Module 7 bestehen aus seitlichen Trägern 8, oberen Trägern 9 und unteren Trägern 10, die gemeinsam eine gerüstartige Struktur ausbilden und mehrere Regalfächer 11 für Sammelbehälter S bereitstellen.

Die Struktur des Aufbaus ähnelt mehreren Spalten, in denen jeweils die Sammelbehälter S aufnehmende kleinzellige Regalfächer 11 durch angebrachte Winkel 12 ausgebildet werden, auf denen die Sammelbehälter S aufliegen. Die Winkel 12 sind dabei jeweils auf gegenüberliegenden Seiten der seitlichen Träger 8 angeordnet.

Vorliegend sind beispielhaft fünf horizontal verteilte Spalten und sechs in der Höhe angeordnete Reihen vorgesehen, wobei die Regalfächer 11 eine doppelte Tiefe aufweisen, um jeweils zwei hintereinander angeordnete Sammelbehälter S aufzunehmen.

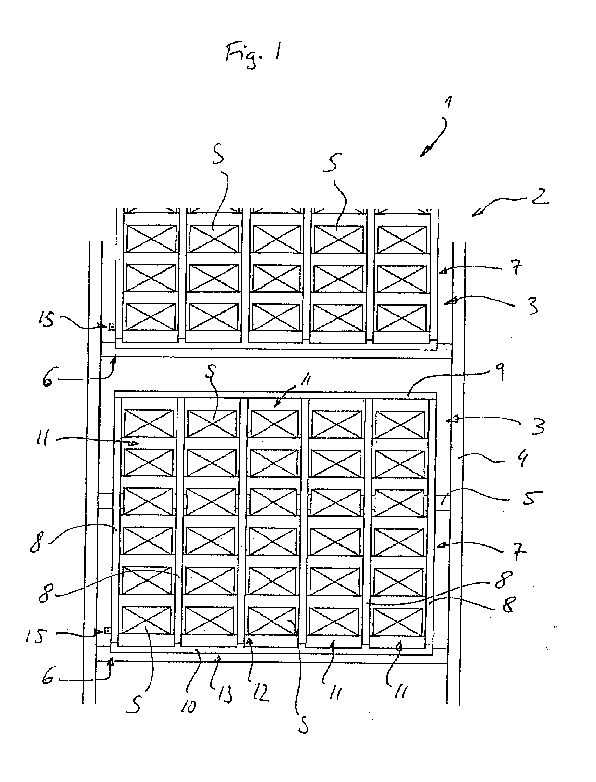

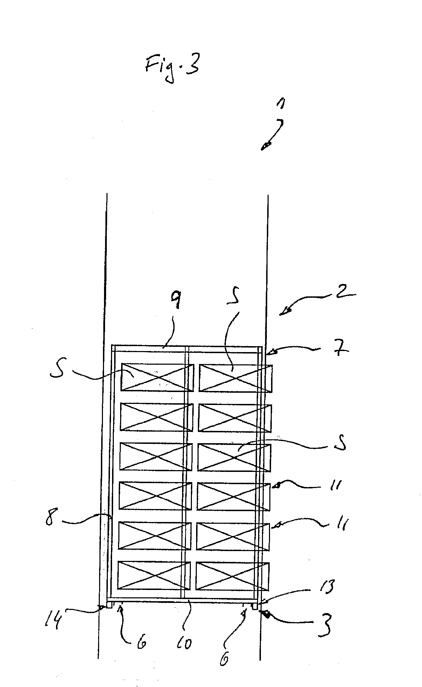

Die Module 7 selbst liegen mit den seitlichen unteren Trägern 10 auf den Auflageträgern 6 der ursprünglichen Regalfächer 3 auf, wobei der vordere untere Träger 13 und der hintere untere Träger 14 derart unten am Modul 7 angeordnet sind, dass sie die Auflageträger 6 jeweils umgreifen (vgl. Fig. 1 und 3), so dass das jeweilige Modul 7 nicht in Richtung der Tiefe des ursprünglichen Regalfachs 3 verschoben werden kann. Notwendig ist somit nötigenfalls lediglich eine seitliche Fixierung.

Die einzelnen neuen Regalfächer 11 werden von einem Regalbediengerät bedient, d.h. angefahren und be- sowie entladen. Im Rahmen des Umbaus des Regals 2 ist es selbstverständlich, dass auch, falls notwendig, das Regalbediengerät für den Betrieb mit den einzelnen kleinen Gegenständen umgerüstet wird.

Der hierfür notwendige Lernprozess erfolgt in einer automatischen Lernfahrt, wobei die Koordinaten jedes Moduls bzw. jedes Fachs bestimmt und gespeichert werden. Zur Erleichterung der Durchführung ist jedes Modul mit einer selbsttätig vom Regalbediengerät anfahr- und erkennbaren Lochmaske 15 an der Vorderseite versehen. Die Lochmaske ist als Bohrung in einem Blech ausgebildet und an jedem Modul 7 an gleicher Stelle angeordnet.

### Bezugszeichenliste

- 1: Regallager
- 2: Regal
- 3: ursprüngliches Regalfach
- 4: seitlicher Träger
- 5: Querträger
- 6: Auflageträger
- 7: Modul
- 8: seitlicher Träger
- 9: oberer Träger
- 10: unterer Träger
- 11: Regalfach
- 12: Winkel
- 13: vorderer unterer Träger
- 14: hinterer unterer Träger
- 15: Lochmaske
- S: Sammelbehälter

## Patentansprüche

1. Verfahren zum Umbau eines Regals (2) eines Regallagers (1), bei dem große Gegenstände in Regalfächern (3) abgelegt werden, in ein Regal (2) für die Lagerung kleinerer Gegenstände (S), bei dem die kleineren Gegenstände (S) einzeln in Regalfächer (11) gelagert werden, wobei die bestehenden Regalfächer (3) für das separate Einlagern der kleineren Gegenstände (S) derart unterteilt werden, dass Regalfächer (11) für die kleineren Gegenstände (S) bereitgestellt werden.

2. Verfahren zum Umbau eines Regals (2) eines Regallagers (1), bei dem mehrere Gegenstände (S) gemeinsam auf Paletten beladen in Regalfächern (3) abgelegt werden, in ein Regal (2) für die Einzellagerung der Gegenstände (S), bei dem die Gegenstände (S) einzeln in Regalfächer (11) gelagert werden, wobei die bestehenden Paletten-Regalfächer (3) für das separate Einlagern der einzelnen Gegenstände (S) derart unterteilt werden, dass Regalfächer (11) für die Gegenstände (S) bereitgestellt werden.

3. Verfahren nach Anspruch 2, **dadurch gekennzeichnet, dass** die Regalfächer (11) durch Einbringen modularer Regaleinheiten (7) unterteilt werden.

4. Verfahren nach Anspruch 3, **dadurch gekennzeichnet, dass** die modularen Regaleinheiten (7) derart eingebracht werden, dass sie mit Auflagerträgern (6) der Paletten wechselwirken.

5. Verfahren nach Anspruch 4, **dadurch gekennzeichnet, dass** die modularen Regaleinheiten (7) die Auflageträger (6) zumindest teilweise umgreifen.

6. Verfahren nach einem der Ansprüche 3 bis 5, **dadurch gekennzeichnet, dass** die modularen Regaleinheiten (7) Orientierungshilfen (15) für ein Regalbediengerät bieten.

7. Modul zum Umbau von Regalfächern (3) eines Regals (2) eines Regallagers (1), bei dem große Gegenstände in Regalfächern (3) abgelegt werden, in ein Regal (2) für die Lagerung kleinerer Gegenstände (S), bei dem die kleineren Gegenstände (S) einzeln in Regalfächer (11) gelagert werden, das derart ausgestaltet ist, dass Regalfächer (11) in den bestehenden Regalfächern (3) für das separate Einlagern der einzelnen kleineren Gegenstände (S) bereitgestellt werden.

8. Modul zum Umbau von Regalfächern (3) eines Regals (2) eines Regallagers (1), bei dem mehrere Gegenstände (S) gemeinsam auf Paletten beladen in Regalfächern (3) abgelegt werden, in ein Regal (2) für die Einzellagerung der Gegenstände (S), bei dem die Gegenstände (S) einzeln in Regalfächer (11) gelagert werden, das derart ausgestaltet ist, dass Regalfächer (11) in den bestehenden Regalfächern (3) für das separate Einlagern der einzelnen Gegenstände (S) bereitgestellt werden.

9. Modul nach Anspruch 7, **dadurch gekennzeichnet, dass** es gerüstartig ausgebildet ist.

10. Modul nach Anspruch 8 oder 9, **dadurch gekennzeichnet, dass** es als ein bestehendes Regalfach (3) mit mehreren Stützelementen (8, 9, 10, 12) in kleinzellige Regalfächer (11) für einzelne Gegenstände (S) unterteilend ausgebildet ist.

11. Modul nach Anspruch 9 oder 10, **dadurch gekennzeichnet, dass** die Stützelemente (8, 9, 10, 12) Teil eines modularen Stecksystems sind.

12. Modul nach einem der Ansprüche 8 bis 11, **dadurch gekennzeichnet, dass** es ausgebildet ist, um bestehende Auflageträger (6) für die Paletten zumindest teilweise zu umgreifen.

13. Modul nach einem der Ansprüche 8 bis 12, **dadurch gekennzeichnet, dass** es mit einem Mittel (15) zur Orientierungshilfe für ein Regalbediengerät ausgestattet ist.

14. Modul nach Anspruch 13, **dadurch gekennzeichnet, dass** das Mittel eine Lochmaske (15) ist.
